# EUROPÄISCHE PATENTSCHRIFT

(11) **EP 3 718 912 B1**
(45) Veröffentlichungstag und Bekanntmachung des Hinweises auf die Patenterteilung: **30.08.2023**
(21) Anmeldenummer: 20166397.8
(22) Anmeldetag: 27.03.2020
(51) Int. Cl.: B65B 69/00, B65G 69/18, B65G 65/23

(54) **ANSCHLUSSVORRICHTUNG**
CONNECTION DEVICE
DISPOSITIF DE RACCORDEMENT

(30) Priorität: 05.04.2019 DE 102019204944; 11.04.2019 DE 102019109648
(43) Veröffentlichungstag der Anmeldung: 07.10.2020
(73) Patentinhaber: Hecht Technologie GmbH, 85276 Pfaffenhofen (DE)
(72) Erfinder: Sondermeier, Florian, 85276 Pfaffenhofen/Ilm (DE); Holzner, Wolfgang, 85276 Pfaffenhofen/Ilm (DE); Schwaiger, Thomas, 85276 Pfaffenhofen/Ilm (DE)
(74) Vertreter: Kilian Kilian & Partner

(56) Entgegenhaltungen:
- EP-A1- 3 000 739
- EP-A1- 3 428 080
- EP-A2- 1 958 900
- DE-A1-102005 014 996

## Beschreibung

Die Erfindung betrifft eine Anschlussvorrichtung zum Anschließen einer schlauchförmigen Folie an eine Einrichtung, insbesondere eine Anschlussvorrichtung zum kontaminationsfreien Überführen von pulver-/granulatartigen Stoffen zwischen der schlauchförmigen Folie und der Einrichtung.

Aus dem Stand der Technik sind Anschlussvorrichtungen zum Anschließen schlauchförmiger Folien allgemein bekannt.

Beispielsweise zeigt die europäische Patentanmeldung EP 3 428 080 A1 eine Anschlussvorrichtung zum Anschließen einer schlauchförmigen Folie.

Die dort gezeigte Anschlussvorrichtung beinhaltet eine Klemmeinrichtung, in der eine schlauchförmige Folie zum Entleeren/Befüllen eines Behälters eingeklemmt werden kann.

Die Klemmeinrichtung definiert einen Klemmraum, in den die schlauchförmige Folie mittels eines Seils zusammengeschnürt und anschließend durch axiales Versetzen eines Klemmringes festgeklemmt wird.

Zur Realisierung der Klemmung wird das verwendete Seil mittels eines Seileinführungselementes in einen Ringraum einer Einführhalterung soweit eingeführt, bis es nach Durchlaufen des Ringraumes und vollständigem Umlaufen der schlauchförmigen Folie wieder nach außen austritt. Beide Enden des Seils sind für einen Anwender hiernach von außen greifbar und können unter Verwendung eines Hebels angezogen werden, sodass das Seil sich zusammen mit der Folie in den Klemmraum versetzt und die Folie durch den Klemmring anschließend festgeklemmt werden kann.

Der Anwender muss diesen Vorgang zum einen für jede anzuschließende schlauchförmige Folie erneut durchführen, was insbesondere Zeit erfordert. Zum anderen ist das entsprechende Seileinführungselement und der Hebel zum Anziehen des Seils konstruktiv aufwendig.

Andere in der europäischen Patentanmeldung genannten Alternativen zu dem Seil sind ebenfalls dahingehend konstruktiv aufwendig, als dass Einrichtungen zum radialen Versetzen von Einführelementen in sehr kurzen Abständen entlang der Einführhalterung vorgesehen werden müssen.

Vor diesem Hintergrund ist es Aufgabe der Erfindung, eine Anschlussvorrichtung zu schaffen, die einen einfacheren konstruktiven Aufbau hat. Zumindest ist es Aufgabe der Erfindung eine alternative Anschlussvorrichtung zu schaffen.

Diese Aufgabe wird mit einer Anschlussvorrichtung gemäß Patentanspruch 1 gelöst. Bevorzugte Ausführungsformen sind Gegenstand der abhängigen Patentansprüche.

*Gemäß der Erfindung weist eine Anschlussvorrichtung zum Anschließen einer schlauchförmigen Folie*/*Schlauchfolie an eine Einrichtung folgende Merkmal auf:*
*einen Grundkörper, der einen Kanal ausbildet, wobei der Kanal sich entlang einer Kanalachse erstreckt und an einer Öffnung des Grundkörpers endet und nach Außen mündet;*
*eine Klemmeinrichtung, die die Öffnung des Grundkörpers umläuft und eingerichtet ist, die schlauchförmige Folie nach Überziehen über den Grundkörper in einem Klemmraum derart festzuklemmen, dass die schlauchförmige Folie abgedichtet befestigt ist und ein, insbesondere pulver-*/*granulatförmiges, Produkt zwischen dem Grundkörper und der schlauchförmigen Folie kontaminationsfrei überführt werden kann; und*
*ein Einführmittel, das den Grundkörper und die über den Grundkörper gezogene schlauchförmige Folie zumindest teilweise umläuft und sowohl in einer die Kanalachse umlaufenden Umfangsrichtung als auch einer zu der Umfangsrichtung entgegengesetzten Umfangsrichtung derart bewegbar ist, dass es*
   *(i) bei Bewegung in der Umfangsrichtung sich radial zu der Kanalachse in den Klemmraum versetzt und hierdurch die schlauchförmige Folie radial zusammenschnürend in den Klemmraum überführt, und*
   *(ii) bei Bewegung in der entgegengesetzten Umfangsrichtung sich radial zu der Kanalachse aus dem Klemmraum heraus versetzt.*

In der Schüttgüter herstellenden oder verarbeitenden Industrie ist es notwendig, pulver-/granulatförmige Produkte von einem Behälter in eine Einrichtung oder von einer Einrichtung in einen Behälter zu überführen. Hierbei werden oftmals schlauchförmige Folien verwendet, die die Einrichtung und den Behälter miteinander verbinden.

Die verwendeten schlauchförmigen Folien können entweder Teil des Behälters selbst sein, wie beispielsweise der Einlass/Auslass eines Bigbags oder der Innensack eines Fasses, oder können von einem Schlauchfolienvorrat abgeschnittene schlauchförmige Folienstücke sein, die einerseits an der Einrichtung und andererseits an dem Behälter so befestigt werden, dass das Produkt überführt werden kann.

Beispielsweise ist die erfindungsgemäße Anschlussvorrichtung so dimensioniert, dass schlauchförmige Folien mit Durchmessern von 420 mm bis 600 mm angeschlossen werden können.

Bei den Einrichtungen, für die sich die erfindungsgemäße Anschlussvorrichtung eignet bzw. an denen die Anschlussvorrichtung bevorzugt montiert wird, kann es sich - nicht abschließend - beispielsweise handeln um:
eine Produktionsanlage oder Silo, in die ein Bigbag oder Fass zu entleeren ist,
eine Produktionsanlage oder Silo, aus der heraus das Produkt in einen Bigbag oder ein Fass zu füllen ist, und
einen Isolator, an dem ein zu entleerendes Fass zu befestigen ist.

Vor diesem Hintergrund handelt es sich bei der erfindungsgemäßen Anschlussvorrichtung bevorzugt um eine Vorrichtung zum Befüllen und/oder Entleeren von Behältern, die mit der schlauchförmigen Folie - wie im Vorhergehenden erläutert - ausgestattet sind.

Die Montage der Anschlussvorrichtung erfolgt bevorzugt über einen Montageflansch, an dem nach Montage der Kanal in die Einrichtung über eine Öffnung mündet.

Die Klemmeinrichtung ist erfindungsgemäß so ausgestaltet, dass die schlauchförmige Folie, beispielsweise gasdicht, abgedichtet befestigt ist und somit das Produkt kontaminationsfrei überführt werden kann bzw. der Behälter kontaminationsfrei entleert/befüllt werden kann.

Erfindungsgemäß wird das Klemmmittel entlang des Umfanges des Grundkörpers, d. h. in der Umfangsrichtung und der hierzu entgegengesetzten Umfangsrichtung, bewegt, um es radial zur Kanalachse in den Klemmraum oder aus dem Klemmraum heraus zu versetzen. Das Klemmmittel kann einerseits ortsfest verbaut bleiben und zum anderen konstruktiv einfach aufgebaut sein, weil Einrichtungen, die das Klemmmittel radial versetzen, nicht an mehreren Positionen um den Grundkörper herum angeordnet werden müssen.

Die Kanalachse kann bevorzugt der Längsachse des Grundkörpers entsprechen und/oder, wenn der Kanal symmetrisch ist, der entsprechenden Symmetrieachse. Bevorzugt ist der Kanal im Schnitt senkrecht zur Kanalachse kreisförmig ausgebildet, sodass die Kanalachse bevorzugt der Mittenachse entspricht.

Das Einführmittel und die Klemmeinrichtung können so ausgebildet sein, dass das Einführmittel nach Einführen der schlauchförmigen Folie in dem Klemmraum verbleibt und erst dann wieder entfernt wird, wenn eine neue schlauchförmige Folie anzuschließen ist, oder nach dem Einführen der schlauchförmigen Folie sofort wieder aus dem Klemmraum entfernt wird.

Bevorzugt ist die Klemmeinrichtung dazu eingerichtet, den Klemmraum zu öffnen und nach dem radialen Einführen der schlauchförmigen Folie wieder zu schließen, um die schlauchförmige Folie in dem Klemmraum festzuklemmen.

Die Klemmeinrichtung ist insbesondere dazu eingerichtet, den Klemmraum derart in Richtung der Kanalachse zu öffnen, dass der Klemmraum radial zu der Kanalachse nach außen geöffnet und nach innen (beispielsweise durch eine Außenoberfläche des Grundkörpers) geschlossen ist, und nach dem radialen Einführen der schlauchförmigen Folie in Richtung der Kanalachse wieder zu schließen, um die schlauchförmige Folie in dem Klemmraum festzuklemmen.

Die Klemmeinrichtung der Anschlussvorrichtung kann bevorzugt zumindest eine in Richtung der Kanalachse aufweitbare/expandierbare Blähdichtung sein, wobei die Klemmeinrichtung eingerichtet ist, die Blähdichtung zum Öffnen und Schließen des Klemmraumes zu betätigen. Bevorzugt weist der Grundkörper der Anschlussvorrichtung einen ersten Befestigungsflansch und einen zweiten Befestigungsflansch auf, wobei die Blähdichtung an einem der beiden Befestigungsflansche angeordnet und in der Richtung der Kanalachse derart expandierbar ist, dass sie den sich zwischen dem ersten und zweiten Befestigungsflansch befindenden Klemmraum schließt und gegen den jeweils anderen Befestigungsflansch drückt.

Durch diese Ausgestaltung kann die schlauchförmige Folie in dem Klemmraum durch die Blähdichtung festgeklemmt werden.

*Die erfindungsgemäße Anschlussvorrichtung weist weiterhin auf:*
*eine ringförmige Einführhalterung, die die Klemmeinrichtung um die Kanalachse herum umläuft und einen Ringraum aufweist, der das Einführmittel bei der Bewegung in der Umfangsrichtung und der Bewegung in der entgegengesetzten Umfangsrichtung zumindest teilweise führt; und*
*eine Zugvorrichtung, an der ein Befestigungsabschnitt des Einführmittels befestigt ist und die eingerichtet ist, (i) auf das Einführmittel eine Kraft, bevorzugt eine Zugkraft, derart auszuüben, dass* es *die Bewegung in der Umfangsrichtung ausführt, und (ii) auf das Einführmittel eine zu der Kraft entgegengesetzte Kraft, bevorzugt eine entsprechende Druckkraft, derart auszuüben, dass es die Bewegung in der entgegengesetzten Umfangsrichtung ausführt; wobei*
*die Zugvorrichtung eingerichtet ist, die Kraft und die entgegengesetzte Kraft auf das Einführmittel tangential zu der ringförmigen Einführhalterung aufzubringen.*

Die Zugvorrichtung ist bevorzugt an der Einführhalterung befestigt.

Das Einführmittel kann in dem Ringraum bei der Bewegung in der Umfangsrichtung und der entsprechenden entgegengesetzten Umfangsrichtung gleiten, wobei es bei den Vorgängen, in denen es in den Klemmraum versetzt oder aus diesem wieder heraus zurückversetzt wird, durch Seitenwände, die den Ringraum in Richtung der Kanalachse oder radial hierzu begrenzen, so geführt wird, dass es zuverlässig zwischen dem Ringraum und dem Klemmraum versetzt werden kann.

Die Zugvorrichtung der erfindungsgemäßen Anschlussvorrichtung ist bevorzugt eine motorische Zugvorrichtung, die eingerichtet ist, die Kräfte gleichmäßig und kontinuierlich auf das Klemmmittel auszuüben. Antriebe für die motorische Zugvorrichtung können beispielsweise pneumatische oder elektrische Antriebe sein.

Die tangentiale Ausrichtung der Zugvorrichtung in Bezug auf die ringförmige Einführhalterung ermöglicht eine gute Führung des Einführmittels, insbesondere dann, wenn dieses, wie im Folgenden noch erläutert, als Seil, Band oder Kette ausgestaltet ist.

Der Befestigungsabschnitt des Einführmittels ist bevorzugt ein Abschnitt, über den das Einführmittel an der Zugvorrichtung lösbar befestigt werden kann. Beispielsweise ermöglicht der Befestigungsabschnitt eine Schraubverbindung zwischen Zugvorrichtung und Einführmittel.

*Bevorzugt ist ein weiterer Befestigungsabschnitt des Einführmittels an einer Befestigungseinrichtung befestigt, die an der Einführhalterung so vorgesehen ist, dass das Einführmittel von der Befestigungseinrichtung durch den Ringraum hindurch zu der Zugvorrichtung verläuft; wobei*
*(i) bei Aufbringen der Kraft, vorzugsweise der Zugkraft, auf das Einführmittel durch die Zugvorrichtung das Einführmittel einerseits durch die Befestigungseinrichtung gehaltert wird und andererseits durch die Zugvorrichtung derart gezogen wird, dass es die Bewegung in der Umfangsrichtung ausführt und sich aus dem Ringraum heraus radial zu der Kanalachse in den Klemmraum versetzt, und*
*(ii) bei Aufbringen der entgegengesetzten Kraft, vorzugsweise der Druckkraft, auf das Einführmittel durch die Zugvorrichtung das Einführmittel einerseits durch die Befestigungseinrichtung gehaltert wird und andererseits durch die Zugvorrichtung derart gedrückt wird, dass es die Bewegung in der entgegengesetzten Umfangsrichtung ausführt und sich aus dem Klemmraum heraus radial zu der Kanalachse in den Ringraum versetzt.*

Der weitere Befestigungsabschnitt ist bevorzugt ebenfalls so ausgebildet, dass das Einführmittel lösbar, beispielsweise über eine Schraubverbindung, befestigt werden kann.

Die Befestigungseinrichtung und die Zugvorrichtung sind bevorzugt an der Einführhalterung befestigt, wobei das Einführmittel durch entsprechende Durchbrüche in der Einführhalterung hindurch in den/aus dem Ringraum verläuft und außerhalb der Einführhalterung an der Befestigungseinrichtung bzw. der Zugvorrichtung befestigt ist. Die Befestigungseinrichtung kann beispielsweise eine an der Einführhalterung vorgesehene, feststehende Befestigungseinrichtung oder alternativ eine weitere Zugvorrichtung sein.

*Bevorzugt ist das Einführmittel ein Seil, ein elastisches Band oder eine Kette aus drehbar zueinander gelagerten, rigiden Elementen, das*/*die durch die Zugvorrichtung gezogen und gedrückt wird.*

Die genannten Einführmittel sind bevorzugt so dimensioniert, dass bei Aufbringen der entgegengesetzten Kraft, d. h. einer bevorzugten Druckkraft, das entsprechende Einführmittel die gewünschte Bewegung in der entgegengesetzten Umfangsrichtung vollzieht und sich aus dem Klemmraum heraus in den Ringraum versetzt.

Das Seil ist beispielsweise ein Metallseil, dass eine entsprechende Eigensteifigkeit besitzt.

*Das Einführmittel, beispielsweise das Seil, das elastische Band oder die Kette, ist bevorzugt einerseits an der Befestigungseinrichtung befestigt, durchläuft den Grundkörper durch den Ringraum hindurch bevorzugt vollständig derart, dass es sich an einem Kreuzungsabschnitt überkreuzt, und andererseits an der Zugvorrichtung befestigt ist; wobei*
*(i) bei Aufbringen der Kraft, insbesondere der Zugkraft, auf das Einführmittel durch die Zugvorrichtung das Einführmittel einerseits durch die Befestigungseinrichtung gehaltert wird und andererseits durch die Zugvorrichtung derart gezogen wird, dass* es *die Bewegung in der Umfangsrichtung zu einem solchen Ausmaß ausführt, dass der Kreuzungsabschnitt in den Klemmraum versetzt wird, und*
*(ii) bei Aufbringen der entgegengesetzten Kraft, insbesondere der Druckkraft, auf das Einführmittel durch die Zugvorrichtung das Einführmittel einerseits durch die Befestigungseinrichtung gehaltert wird und andererseits durch die Zugvorrichtung derart gedrückt wird, dass es die Bewegung in der entgegengesetzten Umfangsrichtung zu einem solchen Ausmaß ausführt, dass der Kreuzungsabschnitt wieder aus dem Klemmraum heraus versetzt wird.*

*Die Zugvorrichtung beinhaltet bevorzugt ein linear geführtes Zugelement, an dem der Befestigungsabschnitt des Einführmittels befestigt ist, und ist eingerichtet, die Kraft und die entgegengesetzte Kraft auf das Einführmittel auszuüben, indem sie das Zugelement linear geführt versetzt; und*
*die Zugvorrichtung derart angeordnet ist, dass das entsprechende Zugelement tangential zu der ringförmigen Einführhalterung versetzbar ist.*

Das Zugelement ist bevorzugt ein pneumatisch betriebener Schlitten, der auf einer Führung linear gleitet. Dadurch dass das Zugelement linear und tangential zu der ringförmigen Einführhalterung versetzbar ist, kann insbesondere auf das Einführmittel in Form eines Seils die Druckkraft gut ausgeübt werden, sodass es die gewünschte Bewegung durchführt.

*Die erfindungsgemäße Anschlussvorrichtung weist bevorzugt weiterhin auf:*
*eine Dichtung, die den Grundkörper umläuft und eingerichtet ist, eine neue schlauchförmige Folie abgedichtet zu befestigen, wobei die Dichtung derart angeordnet und ausgestaltet ist, dass die neue schlauchförmige Folie so befestigt*/*abgedichtet wird, dass sie auf einen in dem Klemmraum festgeklemmten schlauchförmigen Folienrest, der von einer zuvor angeschlossenen schlauchförmigen Folie stammt, gedrückt wird und die Dichtung eine solche Dichtkraft auf die neue schlauchförmige Folie und den schlauchförmigen Folienrest ausübt, dass der Folienrest, bevorzugt manuell, herausgezogen werden kann, ohne eine durch die Dichtkraft erzielte Dichtwirkung zu verlieren.*

*Bevorzugt ist die Einführhalterung in Richtung der Kanalachse durch eine Führungseinrichtung verfahrbar und ist die Dichtung an der Einführhalterung derart befestigt, dass sie bei Heranfahren der Einführhalterung an den Grundkörper die neue schlauchförmige Folie über den Folienrest streift und hierbei die Dichtkraft radial zur Kanalachse auf die neue schlauchförmige Folie und den Folienrest ausübt.*

Die Dichtung kann beispielsweise durch eine erste Dichtlippe und eine zweite Dichtlippe, die ihre Dichtkraft radial zur Kanalachse ausüben, ausgebildet sein. Bevorzugt liegt der Klemmraum zwischen den Dichtlippen, wenn die Einführhalterung maximal an den Grundkörper herangefahren ist. Alternativ hierzu kann die Dichtung auch beispielsweise durch eine erste Blähdichtung und eine zweite Blähdichtung, die ihre Dichtkraft radial zur Kanalachse ausüben, ausgebildet sein, wobei auch in diesem Fall der Klemmraum bevorzugt zwischen den Dichtlippen liegt, wenn die Einführhalterung maximal an den Grundkörper herangefahren ist.

Bevorzugt trägt die Einführhalterung einen Dichtflansch mit einer Dichtung, über die die schlauchförmige Folie, wenn die Einführhalterung maximal an den Grundkörper heran verfahren ist, an einer in Richtung der Kanalachse weisenden Stirnseite des Grundkörpers abdichtbar ist. Alternativ kann die Einführhalterung einen Dichtring tragen, über den die schlauchförmige Folie, wenn die Einführhalterung maximal an den Grundkörper heran verfahren ist, an einer zur Kanalachse in radiale Richtung weisenden Oberfläche des Grundkörpers, bevorzugt mit einem die Öffnung festlegenden Rand bündig, abdichtbar ist.

Die Dichtung des Dichtflansches/Dichtringes ist bevorzugt eine Blähdichtung, die für das Abdichten der schlauchförmigen Folie betätigt werden kann.

Die Führungseinrichtung ist bevorzugt aus einem oder einer Vielzahl von Hubzylindern ausgebildet, der/die für das Verfahren der Einführhalterung aus- und eingefahren werden können.

Die Einführhalterung kann den Dichtflansch/Dichtring, der die schlauchförmige Folie axial/radial zur Kanalachse über seine Dichtung an dem Grundkörper abdichten kann, sowohl für den Fall, dass die Anschlussvorrichtung zur Entleerung eines Behälters bestimmt ist, als auch für den Fall, dass die Anschlussvorrichtung zur Befüllung eines Behälters bestimmt ist, tragen.

Eine bestimmungsgemäße Verwendung der erfindungsgemäßen Anschlussvorrichtung stellt sich wie folgt dar:
Wenn es sich nicht um den aller ersten Anschluss einer schlauchförmigen Folie handelt, ist in dem Klemmraum ein Folienrest festgeklemmt, der von einer zuvor angeschlossenen schlauchförmigen Folie stammt.

In einem ersten Schritt wird die Einführhalterung von dem Grundkörper entfernt, beispielsweise durch Ausfahren der Hubzylinder.

Der Anwender kann nunmehr eine neue anzuschließende schlauchförmige Folie über den Grundkörper ziehen, sodass sie über den Klemmraum hinaus über den Grundkörper ragt.

Die neue schlauchförmige Folie wird nunmehr gegenüber dem Grundkörper abgedichtet, beispielsweise durch Heranfahren der Einführhalterung, wodurch die Dichtlippen/Blähdichtungen die neue schlauchförmige Folie über den Folienrest streifen und beide Folien gemeinsam an den Grundkörper drücken.

Im nächsten Schritt kann der Anwender den Klemmraum öffnen und den Folienrest entfernen, indem der Anwender diesen unter der neuen schlauchförmigen Folie wegzieht.

Für das Entfernen des Folienrests kann der Grundkörper einen seitlichen Eingriff aufweisen, wobei ein solcher seitlicher Eingriff insbesondere dann vorgesehen werden kann, wenn die Anschlussvorrichtung für Bigbags vorgesehen ist. Wenn die Anschlussvorrichtung allerdings an einer Einrichtung montiert ist, die selbst Eingriffe aufweist, wie beispielsweise ein Isolator mit Handschuhen, ist der Eingriff (des Grundkörpers) nicht notwendig.

Der Anwender aktiviert in diesem Zustand nunmehr die Zugvorrichtung, wodurch das Einführmittel die neue schlauchförmige Folie in dem Klemmraum zusammenschnürt.

Anschließend schließt der Anwender den Klemmraum, beispielsweise durch Aktivieren der Blähdichtung, die sich in Richtung der Kanalachse ausdehnt und die schlauchförmige Folie festklemmt. Das Einführmittel kann in dem Klemmraum verbleiben oder vorher entfernt werden.

Bevorzugt wird anschließend die Dichtung des Dichtflansches/Dichtrings zusätzlich betätigt, um die schlauchförmige Folie an der Stirnseite/dem Rand des Grundkörpers abgedichtet zu fixieren.

Das zu überführende pulverförmige/granulatförmige Produkt kann nunmehr zwischen der schlauchförmigen Folie und dem Grundkörper überführt werden, beispielsweise durch Entleeren oder Befüllen des Bigbags oder eines in einem Fass aufgenommenen Foliensacks.

Anschließend wird die schlauchförmige Folie zweifach abgebunden und zwischen den Abbindestellen durchtrennt. Der Teil der durchtrennten schlauchförmigen Folie, der an dem Grundkörper verbleibt, bildet den Folienrest, der bei einem erneuten Anschließen einer schlauchförmigen Folie wieder entfernt wird.

Im Folgenden wird eine bevorzugte Ausführungsform einer erfindungsgemäßen Anschlussvorrichtung unter Bezug auf die beigefügten Figuren erläutert.
**Figur 1A** zeigt die erfindungsgemäße Anschlussvorrichtung in einer perspektivischen Ansicht, wobei eine Einführhalterung über eine Führungseinrichtung maximal an einen Grundkörper der Anschlussvorrichtung herangefahren ist;
**Figur 1B** zeigt die erfindungsgemäße Anschlussvorrichtung ebenfalls in einer perspektivischen Ansicht, wobei die Einführhalterung durch die Führungseinrichtung von dem Grundkörper entfernt ist bzw. die Führungseinrichtung maximal ausgefahren ist;
**Figur 1C** zeigt die erfindungsgemäße Anschlussvorrichtung von oben, gesehen entlang einer Kanalachse eines durch den Grundkörper definierten Kanals;
**Figur 2** zeigt den Grundkörper der erfindungsgemäßen Anschlussvorrichtung in einer Seitenansicht;
**Figur 3A** zeigt perspektivisch eine Einführhalterung und eine Zugvorrichtung der erfindungsgemäßen Anschlussvorrichtung in einem Schnitt senkrecht zur Kanalachse der Anschlussvorrichtung, wobei ein Einführmittel in Form eines Seiles sichtbar ist;
**Figur 3B** zeigt die Schnittansicht aus Figur 3A, gesehen in Richtung der Kanalachse;
**Figur 3C** zeigt eine Schnittansicht der erfindungsgemäßen Anschlussvorrichtung entlang der Kanalachse, wobei ein durch die Klemmeinrichtung definierter Klemmraum und ein Ringraum der Einführhalterung, in dem das Seil angeordnet ist, sichtbar sind;
**Figur 3D** zeigt den in Figur 3C eingekreisten Bereich in einer vergrößerten Darstellung;
**Figur 4A** zeigt eine bevorzugte Variante der erfindungsgemäßen Anschlussvorrichtung, die zum Anschließen von BigBags dient, in einer perspektivischen Ansicht, wobei die Einführhalterung maximal an den Grundkörper der Anschlussvorrichtung durch die Führungseinrichtung herangefahren ist;
**Figur 4B** zeigt die bevorzugte Variante der erfindungsgemäßen Anschlussvorrichtung aus Figur 4A, wobei die Einführhalterung durch die Führungseinrichtung maximal von dem Grundkörper entfernt ist bzw. weggefahren ist;
**Figur 5A** zeigt eine Fassentleerungseinrichtung, bei der die erfindungsgemäße Anschlussvorrichtung auf der Rückseite eines Isolators montiert ist; und
**Figur 5B** zeigt die Fassentleerungsvorrichtung aus Figur 5A von vorne.

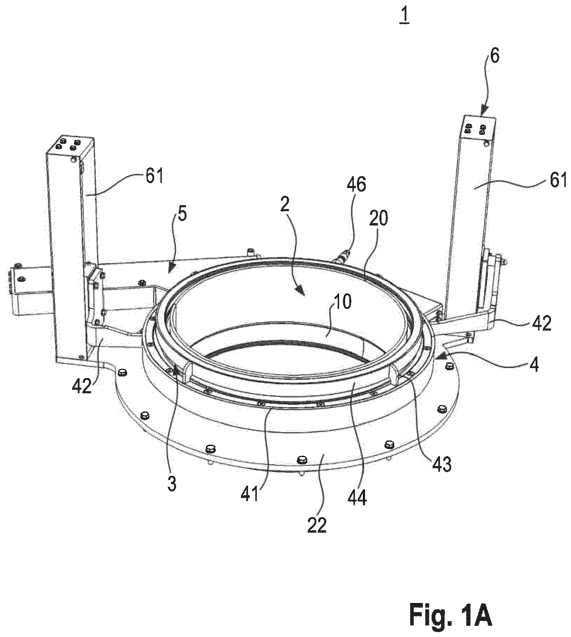

In Figur 1A ist eine erfindungsgemäße Anschlussvorrichtung 1 dargestellt.

Die Anschlussvorrichtung 1 beinhaltet einen Grundkörper 2, eine Klemmeinrichtung 3, eine Einführhalterung 4, eine Zugvorrichtung 5, und eine Führungseinrichtung 6.

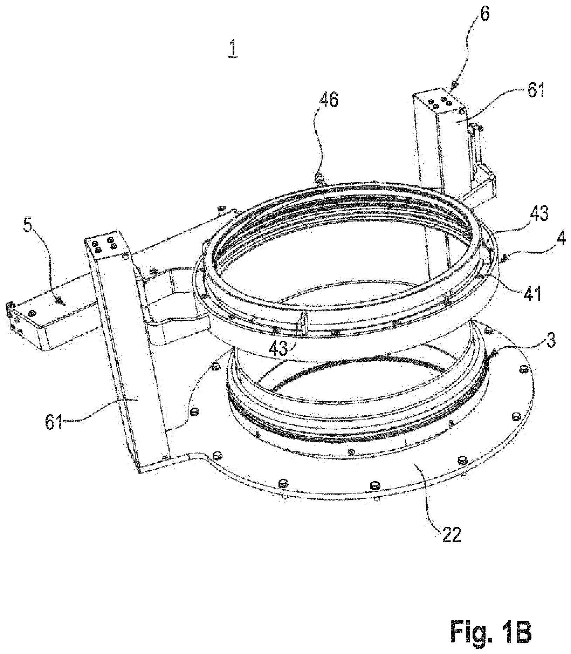

Figuren 1A und 1B sind jeweils eine perspektivische Ansicht der erfindungsgemäßen Anschlussvorrichtung 1 und unterscheiden sich dadurch, dass die Einführhalterung 4 durch die Führungseinrichtung 6 an den Grundkörper 2 herangefahren bzw. weggefahren ist.

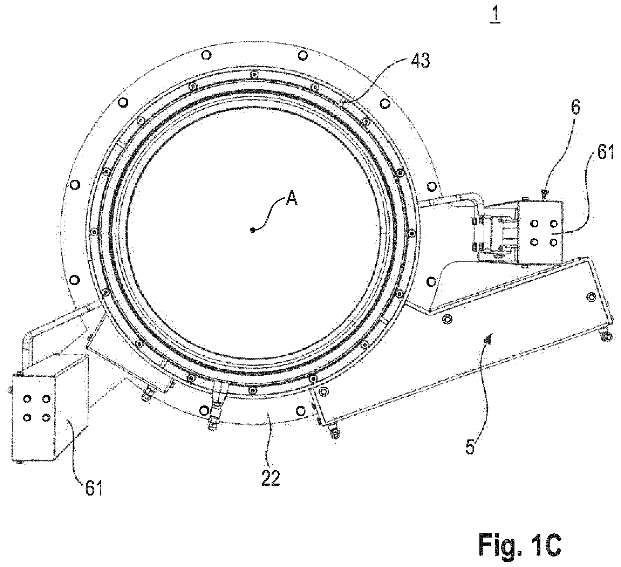

Figur 1C zeigt die erfindungsgemäße Anschlussvorrichtung 1 von oben, gesehen entlang einer Kanalachse A.

Die Anschlussvorrichtung 1 dient erfindungsgemäß zum Anschlie-ßen einer schlauchförmigen Folie an eine Einrichtung, um beispielsweise einen Behälter mit der Einrichtung zu verbinden.

In der Schüttgüter herstellenden Industrie werden beispielsweise pulver-/granulatförmige Produkte aus Einrichtungen, wie Produktionsanlagen oder Silos, in Behälter, wie beispielsweise sogenannte BigBags oder Fässer gefüllt. Die gefüllten Behälter werden anschließend auf Seiten der Schüttgüter verarbeitenden Industrie in Einrichtungen, wie beispielsweise Verarbeitungsanlagen oder Silos, entleert, um das Produkt einer weiteren Verarbeitung zu unterziehen oder für eine spätere Verarbeitung zu speichern.

In beiden Vorgängen, d.h. bei der Befüllung oder Entleerung, werden die Behälter mit der entsprechenden Einrichtung vorzugsweise über eine schlauchförmige Folie verbunden. Die schlauchförmige Folie kann Teil des Behälters selbst oder eine einfache schlauchförmige Verbindungsfolie sein, die sich zwischen dem Behälter und der Einrichtung erstreckt.

Beispielsweise kann es sich bei der schlauchförmigen Folie um den Einlass/Auslass eines BigBags oder um den Einlass/Auslass eines Innensackes eines Fasses handeln.

Die erfindungsgemäße Anschlussvorrichtung 1 erlaubt ein zuverlässiges und sicheres Anschließen einer solchen schlauchförmigen Folie.

### (Grundkörper 2)

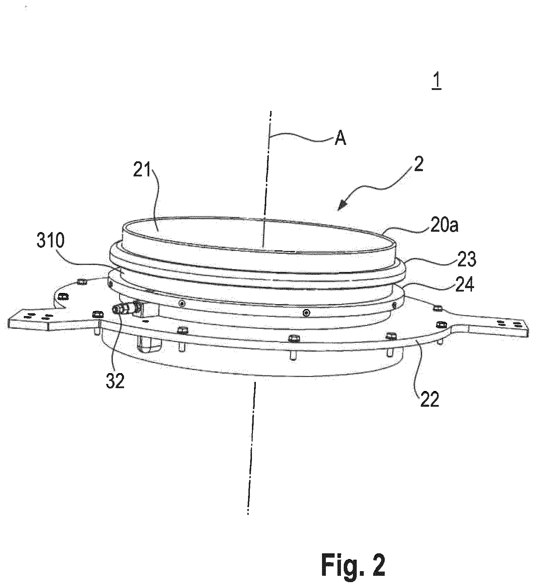

Figur 2 zeigt den Grundkörper 2 der erfindungsgemäßen Anschlussvorrichtung 1 in einer perspektivischen Seitenansicht, wobei die Klemmeinrichtung 3, Einführhalterung 4, Zugvorrichtung 5 und Führungseinrichtung 6 nicht montiert sind.

Der Grundkörper 2 bildet in seinem Innenraum einen Kanal 21 aus, der sich entlang der bereits genannten Kanalachse A erstreckt. Der Grundkörper ist beispielsweise aus einem Metall gefertigt. Die Kanalachse A entspricht der Längsachse des Grundkörpers 2. Der Durchmesser des Kanals 21 beträgt beispielsweise 0,5m.

Bei bestimmungsgemäßer Verwendung der erfindungsgemäßen Anschlussvorrichtung 1 kann das Produkt in Richtung der Kanalachse A durch den Grundkörper 2 bzw. den Kanal 21 hindurch überführt werden.

Der Kanal 21 mündet an einem Anschlussende der Anschlussvorrichtung 1, an dem die schlauchförmige Folie bestimmungsgemäß anzuschließen ist, über eine Öffnung 20a des Grundkörpers 2 in die Au-ßenumgebung der Anschlussvorrichtung 1.

An einem entgegengesetzten Ende des Grundkörpers 2 befindet sich ein Montageflansch 22, über den die Anschlussvorrichtung 1 an der entsprechenden Einrichtung, beispielsweise mittels Schraubverbindungen, befestigt werden kann. Der Kanal 21 mündet an dem entgegengesetzten Ende nach Montage der Anschlussvorrichtung 1 in die genannte Einrichtung.

Der Grundkörper 2 beinhaltet darüber hinaus einen ersten Befestigungsflansch 23 und einen zweiten Befestigungsflansch 24, die den Grundkörper 2 umlaufen und zur Befestigung der im Folgenden erläuterten Klemmeinrichtung 3 dienen.

### (Klemmeinrichtung 3)

Die Klemmeinrichtung 3 dient insbesondere zur Befestigung und Abdichtung einer anzuschließenden schlauchförmigen Folie.

Die Klemmeinrichtung 3 umläuft den Grundkörper 2 vollständig, wie es in Figur 1B gezeigt ist.

Die Klemmeinrichtung 3 ist in dieser Ausführungsform eine Blähdichtung, die durch Druckbeaufschlagung in Richtung der Kanalachse A expandiert werden kann, indem ein Medium, wie beispielsweise ein Gas, insbesondere Druckluft, in die Blähdichtung 3 eingeleitet wird. In Figur 2 ist der entsprechende Ventilanschluss 32 für eine pneumatische Druckleitung gezeigt.

Die Klemmeinrichtung 3, d. h. die Blähdichtung, ist auf dem in Figuren 1B und 2 gezeigten zweiten Befestigungsflansch 24 angeordnet und kann durch das Einleiten des Gases soweit in Richtung der Kanalachse expandiert werden, dass sie gegen den in Figuren 1B und 2 gezeigten ersten Befestigungsflansch 23 drückt.

Die Anordnung der Blähdichtung 3 kann prinzipiell auch umgekehrt sein, d. h. die Blähdichtung könnte an dem ersten Befestigungsflansch 23 angeordnet sein und durch das Einleiten des Gases soweit in Richtung der Kanalachse A expandiert werden, dass sie gegen den zweiten Befestigungsflansch 24 drückt.

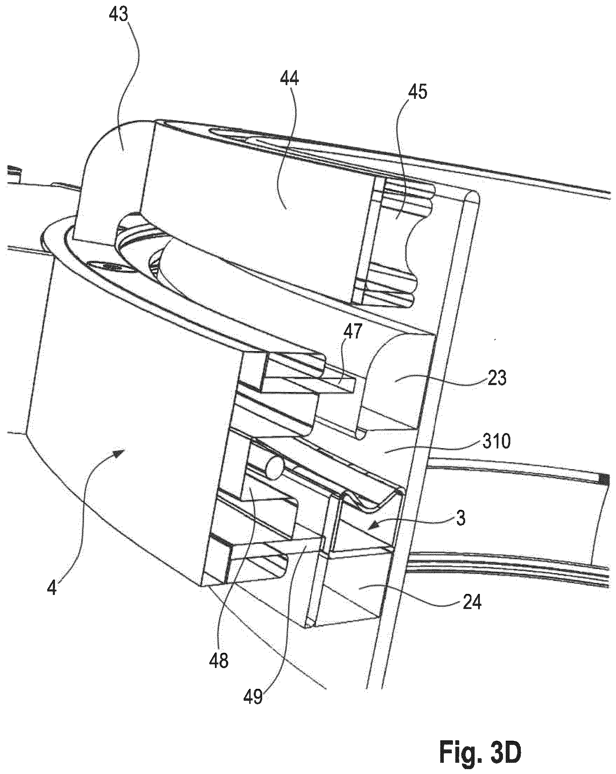

Die Anordnung der Blähdichtung 3 auf dem zweiten Befestigungsflansch 24 ist in der einem Längsschnitt entlang der Kanalachse A entsprechenden Schnittansicht in Figur 3D gut erkennbar. Die Blähdichtung 3 dient bestimmungsgemäß zum abgedichteten Festklemmen einer schlauchförmigen Folie, worauf im Folgenden noch im Einzelnen eingegangen werden wird.

### (Einführhalterung)

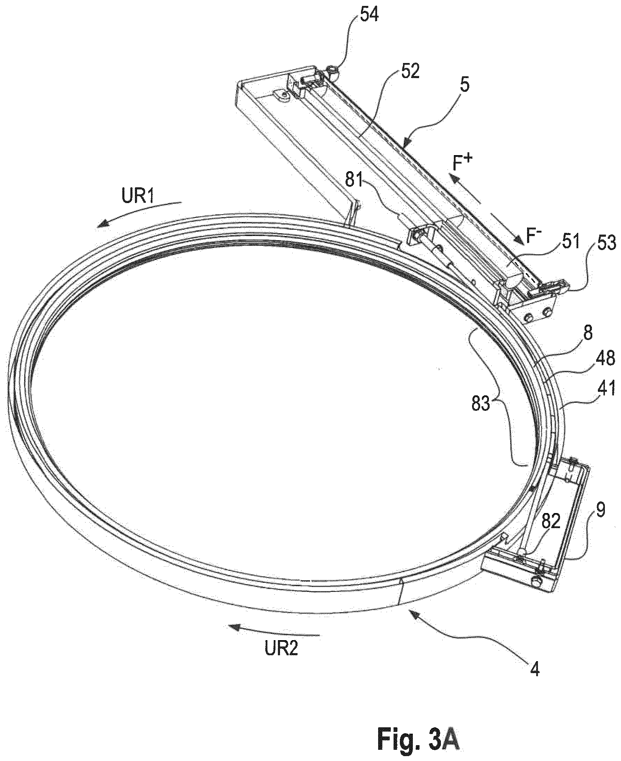

Die erfindungsgemäße Anschlussvorrichtung 1 beinhaltet ferner die Einführhalterung 4, die unter Bezug auf Figuren 1A bis C, und 3A bis 3D beschrieben wird.

Die Einführhalterung 4 weist einen Ringabschnitt 41 auf, der so dimensioniert ist, dass er die Klemmeinrichtung 3 bevorzugt vollständig umläuft.

Die Einführhalterung 4 ist über Führungsabschnitte 42, die in Umfangsrichtung des Ringabschnitts 41 in einem bestimmten Abstand zueinander ausgebildet sind, an einer Führungseinrichtung 6, die zwei Hubzylinder 61 aufweist, befestigt. Die Hubzylinder 61 sind in Richtung der Kanalachse A beispielsweise pneumatisch verstellbar, wodurch die Einführhalterung 4 axial zur Kanalachse A verfahren werden kann.

In Figur 1A ist die Einführhalterung 4 maximal an den Grundkörper 2 herangefahren bzw. sind die Hubzylinder 61 maximal eingezogen. Figur 1B zeigt hingegen einen Zustand, in dem die Einführhalterung 4 maximal von dem Grundkörper 2 weggefahren ist bzw. in dem die Hubzylinder 61 maximal ausgefahren sind.

Die Einführhalterung 4 beinhaltet ferner Armabschnitte 43, die an dem Ringabschnitt 41 ansetzen und einen Dichtring 44 haltern, der in dem in Figur 1A gezeigten Zustand an die Öffnung 20a des Grundkörpers 2 herangefahren ist und über den eine schlauchförmige Folie an der Öffnung 20a radial zur Kanalachse A abgedichtet werden kann.

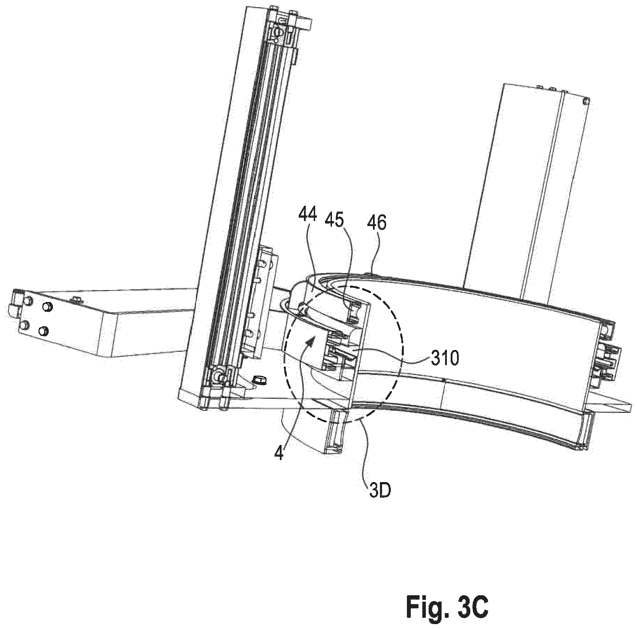

Der Dichtring 44 trägt hierfür auf der dem Grundkörper 2 zugewandten Seite beispielsweise eine Blähdichtung 45, die für das genannte Abdichten gegenüber der Öffnung 20a betätigt werden kann. Die entsprechende Blähdichtung 45 ist in Figur 3C und 3D gut erkennbar.

Die Armabschnitte 43 halten den Dichtring 44 in Bezug auf die Kanalachse A an einer solchen Position, dass bei maximal eingefahrenen Hubzylindern 61 der Dichtring 44 mit einer die Öffnung 20a definierenden Stirnseite des Grundkörpers 2, die in Richtung der Kanalachse A weist, bündig abschließt. Der Anwender kann eine über den Grundkörper 2 geschlagene schlauchförmige Folie an der Öffnung 20a abgedichtet fixieren, indem er die Blähdichtung 45 aktiviert, die sich daraufhin radial zur Kanalachse A sich soweit ausdehnt, dass sie die schlauchförmige Folie radial zur Kanalachse an den Grundkörper 2 drückt. Ein für die Blähdichtung 45 erforderlicher Ventilanschluss 46 für eine Druckleitung ist beispielsweise in Figuren 1A-C gezeigt.

Der Ringabschnitt 41 trägt auf der der Klemmeinrichtung 3 zugewandten Seite eine Dichtung, die aus einer ersten Dichtlippe 47 und einer zweiten Dichtlippe 49 aufgebaut ist.

Die erste Dichtlippe 47 und die zweite Dichtlippe 49 sind axial zur Kanalachse A in einem Abstand zueinander angeordnet, wobei zwischen ihnen ein Ringraum 48 ausgebildet ist. Die Dichtlippen 47, 49 dienen dazu, eine neue anzuschließende, schlauchförmige Folie über einen Folienrest, der durch die Blähdichtung 3 festgeklemmt ist, zu streifen. Die entsprechende Funktion wird im Folgenden noch im Detail erläutert.

In dem Klemmraum 48 ist ein Klemmelement 8 aufgenommen, das im Folgenden erläutert wird.

### (Einführmittel und Zugvorrichtung)

Das in dem Klemmraum 48 aufgenommene Klemmmittel 8 ist in dieser Ausführungsform ein Seil, insbesondere ein Metallseil, das beispielsweise einen Querschnittsdurchmesser von 4mm besitzt.

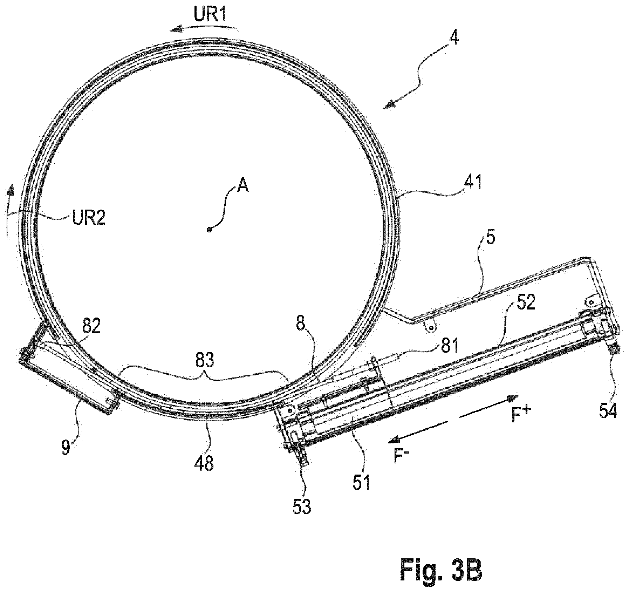

Figuren 3A und 3B zeigen eine Schnittansicht der Einführhalterung 4 und der Zugvorrichtung 5, wobei die Schnittebene senkrecht zur Kanalachse A verläuft.

Das Seil 8 beinhaltet einen Befestigungsabschnitt 81, der an einem Führungselement 51 befestigt ist. Der Befestigungsabschnitt 81 des Seils 8 kann hierfür beispielsweise ein Gewinde aufweisen, auf das Muttern zur Befestigung geschraubt werden.

Das Führungselement 51 der Zugvorrichtung 5 ist beispielsweise ein pneumatischer Schlitten, der auf einer linearen Führung 52 verfahren werden kann. Entsprechende pneumatische Ventilanschlüsse 53, 54 für den Anschluss von Druckleitungen sind in Figur 3A, 3B gezeigt.

Das Seil 8 beinhaltet darüber hinaus einen weiteren Befestigungsabschnitt 82, der an einer Befestigungseinrichtung 9 befestigt ist. Die Befestigung kann wiederum beispielsweise durch eine Schraubverbindungen realisiert werden.

Die Zugvorrichtung 5 und die Befestigungseinrichtung 9 sind so angeordnet, dass sich das in dem Ringraum 48 befindende Seil 8 an einem Kreuzungsabschnitt 83 überschneidet, wobei sich der Verlauf bzw. die Führung des Seils 8 wie folgt darstellt:
- Das Seil 8 verläuft ausgehend von dem Führungselement 51 der Zugvorrichtung 5 durch einen Durchbruch, der in einer den Ringraum 48 in zu der Kanalachse A radialer Richtung begrenzenden Außenwand des Ringabschnitts 41 gebildet ist, in den Ringraum 48;
- von dort aus verläuft das Seil 8 in dem Ringraum 48 soweit, bis es die Kanalachse A vollständig umlaufen hat und sich an dem Kreuzungsabschnitt 83 überschneidet;
- letztendlich durchläuft das Seil 8 nach dem Kreuzungsabschnitt 83 noch einen weiteren Durchbruch, der ebenfalls in der den Ringraum 48 begrenzenden Außenwand des Ringabschnitts 41 gebildet ist, und von dort zu der Befestigungseinrichtung 9, an der es befestigt ist.

Anders ausgedrückt ist der Befestigungsabschnitt 81 des Seils 8 an dem Führungselement 51 und der weitere Befestigungsabschnitt 82 an der Befestigungseinrichtung 9 derart befestigt, dass sich eine Schlinge des Seils 8 innerhalb des Ringraumes 48 befindet.

Die Zugvorrichtung 5 ist an dem Ringabschnitt 41 der Einführhalterung 4 so befestigt, dass sie den entsprechenden Durchbruch überdeckt und das Seil 8 von dem Führungselement 51 ausgehend tangential zu der den Ringraum begrenzenden Außenwand in den Ringraum 48 eintritt. Anders ausgedrückt verläuft das Seil 8 von dem Führungselement 51 geradlinig durch den Durchbruch hindurch und kommt unmittelbar nach Durchlaufen des Durchbruches mit der den Ringraum begrenzenden Außenwand des Ringabschnitts 41 in Berührung und wird entsprechend von dort ausgehend in dem Ringraum 48 auf seine Bahn gelenkt.

Die Befestigungseinrichtung 9 ist ähnlich zu der Zugvorrichtung 5 an dem Ringabschnitt 41 der Einführhalterung 4 so befestigt, dass sie den weiteren in der den Ringraum 48 begrenzenden Außenwand gebildeten Durchbruch überdeckt. Der weitere Befestigungsabschnitt 82 des Seils 8 ist so an der Befestigungseinrichtung 9 befestigt, dass das Seil 8 den weiteren Durchbruch geradlinig und tangential zu der den Ringraum 48 begrenzenden Außenwand durchläuft.

Die Funktion der Zugvorrichtung 5 wird im Folgenden dargestellt:
Figuren 3A und 3B zeigen eine Ausgangsstellung, in der sich das Seil 8 in dem Ringraum 48 befindet.

Wenn der Anwender die Zugvorrichtung 5 betätigt, wird das Führungselement 51 bzw. der pneumatische Schlitten entlang der Führung 52 geradlinig versetzt. Der pneumatische Schlitten 51 übt hierbei eine Kraft (F⁺), d. h. eine Zugkraft, auf das Seil 8 aus.

Das Seil 8 bewegt sich durch diese Ausübung der Kraft (F⁺) innerhalb des Ringraumes 48 in der Umfangsrichtung UR1 (Gegenuhrzeigersinn), wodurch sich die in dem Ringraum befindende Schlinge des Seils 8 zusammenschnürt und das Seil in den Klemmraum 310 versetzt wird. Das Versetzen des Seils 8 erfolgt bei dem Verfahren des pneumatischen Schlittens 51 sukzessive, weshalb sichergestellt ist, dass das Seil 8 zuverlässig in den Klemmraum 310 geführt übertritt.

Wenn der pneumatische Schlitten 51 maximal verfahren ist, ist das Seil 8 soweit zusammengeschnürt, dass sich auch der Kreuzungsabschnitt 83 in dem Klemmraum 310 befindet.

Um das Seil 8 anschließend wieder zurück in den Ringraum 48 zu versetzen, betätigt der Anwender die Zugvorrichtung 5 und fährt den pneumatischen Schlitten 51 zurück in seine in Figur 3B gezeigte Ausgangsstellung.

Der Schlitten 51 übt während dieser Bewegung eine Kraft (F-), d. h. eine Druckkraft, auf das Seil 8 aus. Das Seil 8 bewegt sich bei Ausübung dieser Druckkraft in der entgegengesetzten Umfangs Richtung UR2 und wird hierdurch zurück in den Ringraum 48 versetzt. Das radiale Versetzen des Seils 8 erfolgt hierbei wiederum sukzessive.

Der Zweck des Einführmittels bzw. des Seils 8 wird unter Bezug auf Figuren 3C und 3D beschrieben, die einen Längsschnitt der Anschlussvorrichtung 1 entlang der Kanalachse A zeigen.

Figur 3D zeigt eine vergrößerte Darstellung des Bereiches 3D aus Figur 3C.

Wenn die Einführhalterung 4 durch die Führungseinrichtung 6 bzw. die Hubzylinder 61 maximal an den Grundkörper 2 herangefahren und der Klemmraum 310 durch Verstellen der Blähdichtung 3 in seinem offenen Zustand ist, befindet sich der Ringraum 48 in zur Kanalachse A axialer Richtung auf Höhe des Klemmraumes 310 bzw. liegt in radialer Richtung zur Kanalachse dem Klemmraum 310 gegenüber.

In Figuren 3C und 3D befindet sich das Seil 8 in seiner Ausgangsstellung, wie es unter Bezug auf Figuren 3A und 3B beschrieben wurde, in der es den Ringraum 48 durchläuft und somit dem Klemmraum 310 in radialer Richtung gegenüberliegt.

Eine vorher über den Grundkörper 2 gezogenen, schlauchförmige Folie, die in Figuren 3C-D nicht gezeigt ist, befindet sich zwischen Klemmeinrichtung 3 und Einführhalterung 4.

Wenn der Anwender in dieser Stellung die Zugvorrichtung 5 aktiviert und den pneumatischen Schlitten 51 versetzt, wird das Seil 8 durch die Zugkraft (F⁺) in die Umfangsrichtung UR1 gezogen und hierdurch zusammengeschnürt. Das Seil 8 tritt hierbei, wie erläutert, sukzessive in den Klemmraum 310 über, wobei die schlauchförmige Folie gleichermaßen zusammen mit dem Seil 8 in den Klemmraum 310 gezogen wird.

Anschließend betätigt der Anwender wiederum die Zugvorrichtung 5, um den pneumatischen Schlitten 51 zurück in seine Ausgangsstellung zu versetzen. Die während des Versetzens des pneumatischen Schlittens 51 auf das Seil 8 ausgeübte entgegengesetzte Kraft (F⁻), d.h. die Druckkraft, drückt das Seil 8 durch den Durchbruch hindurch zurück in den Ringraum 48, wodurch das Seil 8, wie bereits erläutert, sukzessive zurück in den Ringraum 48 übertritt.

Die erfindungsgemäße Anschlussvorrichtung 1 eignet sich zum Anschließen verschiedenartiger Behälter, wie beispielsweise Bigbags oder Fässer.

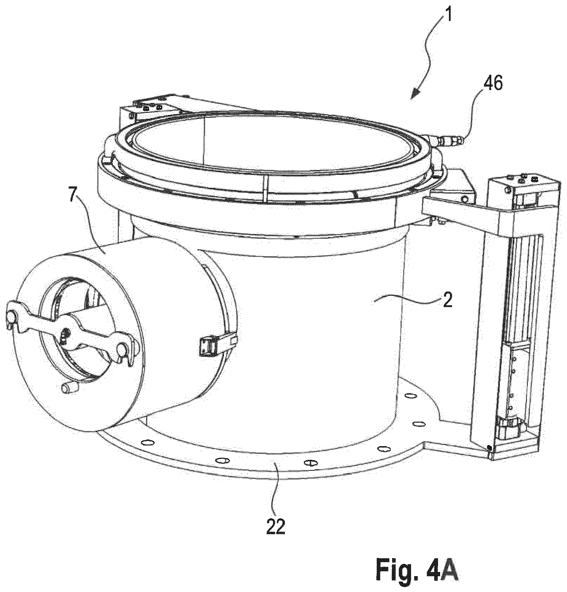

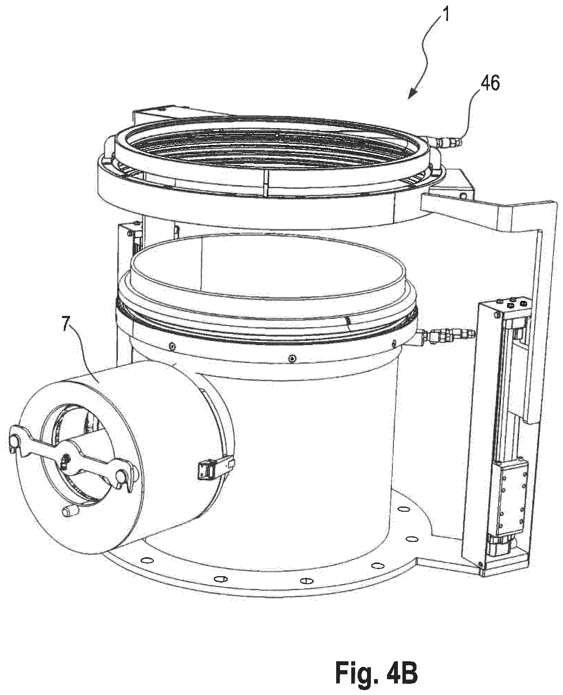

Figuren 4A und 4B zeigen eine Variante der erfindungsgemäßen Anschlussvorrichtung 1, die zum Anschließen von Bigbags vorgesehen ist, wobei sich Figur 4A von Figur 4B dadurch unterscheidet, dass in Figur 4A die Einführhalterung 4 maximal an den Grundkörper 2 herangefahren ist und in Figur 4B der entgegengesetzte Fall gezeigt ist, in dem die Einführhalterung 4 von dem Grundkörper 2 maximal entfernt ist.

Die in Figuren 4A und 4B gezeigte Variante der Anschlussvorrichtung 1 wird insbesondere über ihren Montageflansch 22 an einer Einrichtung montiert. Bei der Einrichtung kann es sich um eine Produktionsanlage oder ein Silo handeln, aus der/dem das Produkt in den Bigbag zu füllen ist oder in die/das der Bigbag zu entleeren ist. Die Montage der Anschlussvorrichtung 1 erfolgt beispielsweise über Schraubverbindungen.

Die Variante der Anschlussvorrichtung 1 beinhaltet einen seitlichen Eingriff 7, der an dem Grundkörper 2 ausgebildet ist.

Der seitliche Eingriff 7 dient dazu, einen in dem Klemmraum 310 festgeklemmten Folienrest, der von einer zuvor angeschlossenen schlauchförmigen Folie stammt, zu entfernen. Damit das Entfernen des Folienrests kontaminationsfrei durchgeführt werden kann, ermöglicht der seitliche Eingriff 7 das Befestigen eines Foliensackes oder bevorzugt einer Endlosschlauchfolie.

Der Anwender kann die Endlosschlauchfolie streckenweise von dem seitlichen Eingriff 7 abziehen und hierdurch in den Grundkörper 2 durch den seitlichen Eingriff 7 hindurch eingreifen, um den genannten Folienrest nach Öffnen des Klemmraumes 310 aus dem Grundkörper 2 herauszuziehen und in der abgezogenen Endlosschlauchfolie durch einen ersten Verschluss einzuschließen. Die Endlosschlauchfolie kann anschließend durch einen zweiten Verschluss wiederum abgebunden werden.

Zur Entsorgung des Folienrests wird die Endlosschlauchfolie zwischen dem ersten und zweiten Verschluss durchtrennt.

Der seitliche Eingriff 7 kann bevorzugt durch einen Deckel verschlossen werden, der dafür sorgt, dass sich kein Produkt in dem seitlichen Eingriff ansammelt.

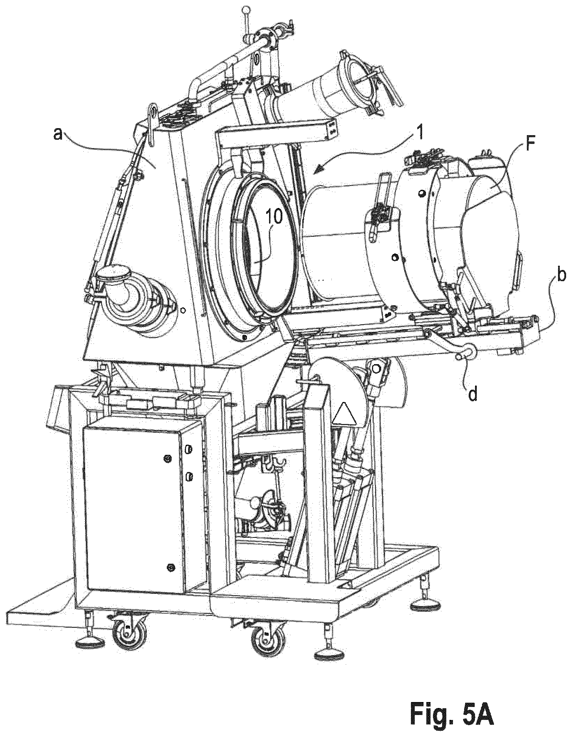

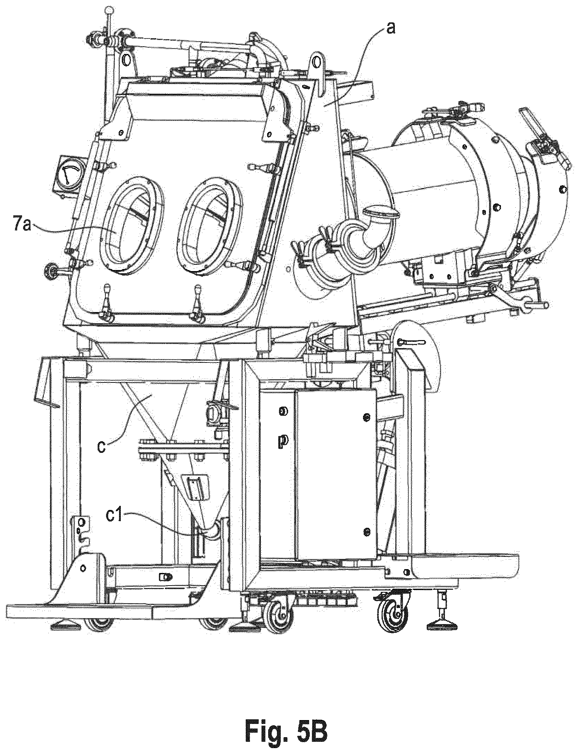

Weiterhin alternativ kann die erfindungsgemäße Anschlussvorrichtung zum Entleeren von Fässern eingesetzt werden. Eine entsprechende Vorrichtung ist beispielsweise in Figuren 5A und 5B gezeigt.

Die erfindungsgemäße Anschlussvorrichtung 1 ist, wie in Figur 5A gezeigt, auf der Rückseite eines Isolators a angeordnet. Die Montage der Anschlussvorrichtung 1 erfolgt, indem der Montageflansch 22 mittels seiner Schraubverbindungen an der Rückseite des Isolators a festgeschraubt wird.

Die in Figur 5A gezeigte Vorrichtung beinhaltet darüber hinaus eine Hubeinrichtung b, die eingerichtet ist, ein zu entleerendes Fass F anzuheben und so zu drehen, dass es an der Anschlussvorrichtung 1 angeschlossen werden kann. Das Fass F kann in der in Figur 5A gezeigten Stellung durch Lösen einer Bremse d horizontal, d. h. in Richtung der Anschlussvorrichtung 1 versetzt werden. Das Fass F kann hierbei soweit versetzt werden, dass der vordere Rand des Fasses F sich in dem Kanal 21 der Anschlussvorrichtung befindet. Bevorzugt kann in dem Kanal 21 eine Ausrolldichtung oder Blähdichtung 10 (siehe Figur 1A und 5A) angeordnet sein, über die der Rand des Fasses F nach Anschließen der schlauchförmigen Folie zusätzlich abgedichtet werden kann.

Ein Foliensack befindet sich in dem Fass F, dessen Auslauf die anzuschließende schlauchförmige Folie bildet.

Der Isolator a weist auf seiner Vorderseite, die in Figur 5B gezeigt ist, Handschuheingriffe 7a auf, in die ein Anwender eingreifen kann und über die der Anwender einen in der Klemmeinrichtung 3 festgeklemmten Folienrest entfernen kann. Der Isolator a besitzt ergo solche Abmessungen, dass der Anwender über die Handschuheingriffe 7a erforderliche Tätigkeiten in dem Innenraum des Isolators a durchführen kann, insbesondere das auf der Rückseite angeschlossene Fass erreichen kann.

Da der in Figuren 5A und 5B gezeigte Isolator die Handschuheingriffe 7a ohnehin besitzt, ist es nicht notwendig, den Grundkörper 2 der Anschlussvorrichtung 1 mit einem seitlichen Eingriff, wie er in Figuren 4A und 4B gezeigt ist, auszustatten.

Der Isolator a besitzt auf seiner Unterseite einen Trichter c, in den ein in dem Fass F enthaltenes pulver- bzw. granulatförmiges Produkt geschüttet werden kann. Der Trichter c kann an einem Anschluss c1 beispielsweise an eine pneumatische Förderanlage oder eine Einrichtung (bspw. Produktionsanlage oder ein Silo) zur Weiterleitung/Weiterverarbeitung des Produktes angeschlossen sein.

Im Folgenden wird eine bestimmungsgemäße Verwendung der erfindungsgemäßen Anschlussvorrichtung 1 unter Bezug auf Figuren 4A, 4B und 5A, 5B erläutert. Das Anschließen eines BigBags oder eines Fasses erfolgt prinzipiell bei beiden Vorrichtungen auf identische Art und Weise.

In einem ersten Schritt wird die Einführhalterung 4 durch Aktivieren der Führungseinrichtung 6 derart verfahren, dass sich die Einführhalterung 4 von der Öffnung 20a des Grundkörpers 2 maximal entfernt. Dies wird durch Betätigen der Hubzylinder 61 durchgeführt.

Es wird von der Annahme ausgegangen, dass es sich bei dem Anschluss des Bigbags/Fasses F nicht um das allererste Anschließen eines Behälters handelt. Aus diesem Grund verschließt ein Folienrest (nicht gezeigt), der von einem zuvor gehandhabten Behälter stammt, die Öffnung 20a in den Grundkörper 2, indem er in dem geschlossenen Klemmraum 310 zwischen Blähdichtung 3 und Befestigungsflansch 23 abgedichtet festgeklemmt ist.

Der Anwender führt die neue schlauchförmige Folie (Auslauf BigBag/Auslauf des in dem Fass F enthaltenen Foliensackes) des gegenwärtig gehandhabten Behälters durch den Dichtring 44 hindurch und zieht die neue schlauchförmige Folie so weit über den Grundkörper 2, dass sie - über den Folienrest verlaufend - den Grundkörper 2 abdeckt.

In diesem Zustand betätigt der Anwender die Führungseinrichtung 6 und fährt die Einführhalterung 4 maximal an den Grundkörper 2 heran. Dies wird durch Einziehen der Hubzylinder durchgeführt.

Die Dichtlippen 47 und 49 streifen hierbei die anzuschließende schlauchförmige Folie über den in dem Klemmraum 310 festgeklemmten Folienrest. Wenn die Einführhalterung 4 die maximal an den Grundkörper 2 herangefahrene Position erreicht, drückt die Dichtlippe 47 die anzuschließende schlauchförmige Folie und den Folienrest zusammen gegen dem Befestigungsflansch 23. Gleichermaßen drückt die Dichtlippe 49 die schlauchförmige Folie und den Folienrest zusammen gegen den weiteren Befestigungsflansch 24 bzw. die Außenoberfläche der Blähdichtung 3. Die nunmehr erreichte Position der Einführhalterung 4 entspricht jener aus Figur 3C und 3D.

Die Dichtlippe 47 und die Dichtlippe 49 üben auf die genannten Folien eine solche Dichtkraft radial zur Kanalachse A aus, die eine ausreichende Dichtwirkung entfaltet, und damit der Kanal 21 gegenüber der Außenumgebung abgedichtet ist.

In einem nächsten Schritt wird die Blähdichtung 3 deaktiviert, d. h. entspannt, indem der Ventilanschluss 32 geöffnet wird und das in ihr enthaltene Gas ausströmt. Die Klemmung des Folienrests wird hierdurch gelöst.

Anschließend entfernt der Anwender den Folienrest, indem er den Folienrest greift und von der Öffnung 20a abzieht, wobei der Folienrest unter der neuen schlauchförmigen Folie herausgezogen wird, ohne das die Dichtwirkung verloren geht. Dies erfolgt bei der in Figur 4A und 4B gezeigten Vorrichtung durch Eingreifen in den seitlichen Eingriff 7 und bei der in Figuren 5A und 5B gezeigten Vorrichtung durch Eingreifen in die Handschuheingriffe 7a.

Demzufolge ist die Dichtkraft der Dichtlippe 47 und der Dichtlippe 49 so bemessen, dass einerseits eine Abdichtung gewährleistet ist, aber andererseits der Anwender den Folienrest unter der neuen anzuschließenden schlauchförmigen Folie wegziehen kann.

In einem nächsten Schritt aktiviert der Anwender die Zugvorrichtung 5, wodurch das Seil die schlauchförmige Folie in dem Klemmraum 310 zusammengeschnürt, wie es im Vorhergehenden erläutert wurde. Die schlauchförmige Folie befindet sich nunmehr in dem Klemmraum 310 und kann durch Aktivierung der Blähdichtung 3 festgeklemmt werden.

Das Seil 8 wird bevorzugt vorher durch Zurücksetzen der Zugvorrichtung 5 aus dem Klemmraum 310 wieder entfernt, könnte allerdings auch in dem Klemmraum 310 verbleiben und zu einem späteren Zeitpunkt erst wieder entfernt werden.

Anschließend oder vor dem Einführen der schlauchförmigen Folie in den Klemmraum 310 kann die Blähdichtung 45, die in dem Dichtring 44 sitzt, betätigt werden und hierdurch die schlauchförmige Folie des Behälters an dem Grundkörper 2 abgedichtet fixiert werden.

Bei der in Figuren 5A und 5B gezeigten Vorrichtung löst der Anwender anschließend die Bremse d und verschiebt das Fass F so weit in den Kanal 21, bis der Rand des Fasses F der Dichtung 10 gegenüberliegt. Anschließend aktiviert der Anwender die Dichtung 10, die daraufhin die über den Rand des Fasses verlaufende schlauchförmige Folie an den Rand des Fasses F gedrückt und zusätzlich abgedichtet.

In diesem jetzt erreichten Zustand kann der Behälter entweder entleert oder gefüllt werden.

Die angeschlossene schlauchförmige Folie des Behälters kann hiernach mittels zweier Verschlüsse zweifach verschlossen und zwischen den Verschlüssen durchtrennt wird, wobei bei der in Figuren 5A und 5B gezeigten Vorrichtung vorher die Bremse d wiederum gelöst und das Fass in die in Figur 5A gezeigte Stellung zurückgezogen wird, in der die schlauchförmige Folie zwischen dem Fass F und der Anschlussvorrichtung 1 zugänglich ist.

Die Anschlussvorrichtung 1 erreicht nunmehr ihren Anfangszustand.

### (Modifikationen)

Das Einführmittel muss nicht zwingend ein Seil sein, sondern kann auch ein elastisches Band sein, dass beispielsweise einen rechteckigen oder runden Querschnitt aufweist. Weiterhin alternativ zu dem Seil kann das Einführmittel eine Kette aus rigiden Elementen sein, die miteinander drehbar gelagert verbunden sind. Eine solche Kette kann in den Ringraum 48 beispielsweise so eingesetzt sein, dass die rigiden Elemente von den in Figur 3B gezeigten Durchbrüchen ausgehend die Kanalachse umlaufen und die jeweiligen am Ende der Kette angeordneten Elemente über ein Verbindungselement mit dem Befestigungsabschnitt 82 bzw. dem pneumatisch betriebenen Schlitten 51 verbunden sind. Bei Verfahren des Schlittens liegen die sich am Ende der Kette befindenden rigiden Elemente zwischen den Durchbrüchen nebeneinander, wobei Abschnitte der rigiden Elemente, die in Richtung der Kanalachse weisen, sich innerhalb des Klemmraumes 310 befinden.

Die Klemmeinrichtung 3 kann wie in der europäischen Patentanmeldung EP 3 428 080 A1 offenbart ausgebildet sein.

## Patentansprüche

1. Anschlussvorrichtung (1) zum Anschließen einer schlauchförmigen Folie an eine Einrichtung, wobei die Anschlussvorrichtung (1) aufweist:
einen Grundkörper (2), der einen Kanal (21) ausbildet, wobei der Kanal (21) sich entlang einer Kanalachse (A) erstreckt und an einer Öffnung des Grundkörpers (20a) endet und nach Außen mündet;
eine Klemmeinrichtung (3), die die Öffnung des Grundkörpers umläuft und eingerichtet ist, die schlauchförmige Folie nach Überziehen über den Grundkörper (2) in einem Klemmraum (310) derart festzuklemmen, dass die schlauchförmige Folie abgedichtet befestigt ist und ein, insbesondere pulver-/granulatförmiges, Produkt zwischen dem Grundkörper (2) und der schlauchförmigen Folie kontaminationsfrei überführt werden kann; und
ein Einführmittel (8), das den Grundkörper (2) und die über den Grundkörper (2) gezogene schlauchförmige Folie zumindest teilweise umläuft und sowohl in einer die Kanalachse (A) umlaufenden Umfangsrichtung (UR1) als auch einer zu der Umfangsrichtung entgegengesetzten Umfangsrichtung (UR2) bewegbar ist; wobei
die Anschlussvorrichtung (1) weiterhin aufweist:
eine ringförmige Einführhalterung (4), die die Klemmeinrichtung (3) um die Kanalachse (A) herum umläuft und einen Ringraum (48) aufweist, der das Einführmittel (8) bei der Bewegung in der Umfangsrichtung (UR1) und der Bewegung in der entgegengesetzten Umfangsrichtung (UR2) zumindest teilweise führt; **dadurch gekennzeichnet, dass** das Einführmittel derart bewegbar ist, dass es
(i) bei Bewegung in der Umfangsrichtung (UR1) sich radial zu der Kanalachse (A) in den Klemmraum (310) versetzt und hierdurch die schlauchförmige Folie radial zusammenschnürend in den Klemmraum (310) überführt, und
(ii) bei Bewegung in der entgegengesetzten Umfangsrichtung (UR2) sich radial zu der Kanalachse (A) aus dem Klemmraum (310) heraus versetzt; wobei die Anschlussvorrichtung (1) weiterhin aufweist:
eine Zugvorrichtung (5), an der ein Befestigungsabschnitt (81) des Einführmittels (8) befestigt ist und die eingerichtet ist, (i) auf das Einführmittel (8) eine Kraft (F⁺) derart auszuüben, dass es die Bewegung in der Umfangsrichtung (UR1) ausführt, und (ii) auf das Einführmittel (8) eine zu der Kraft (F⁺) entgegengesetzte Kraft (F⁻) derart auszuüben, dass es die Bewegung in der entgegengesetzten Umfangsrichtung (UR2) ausführt; wobei
die Zugvorrichtung (5) eingerichtet ist, die Kraft (F⁺) und die entgegengesetzte Kraft (F⁻) auf das Einführmittel (8) tangential zu der ringförmigen Einführhalterung (4) aufzubringen.

2. Anschlussvorrichtung (1) gemäß Patentanspruch 1, wobei ein weiterer Befestigungsabschnitt (82) des Einführmittels (8) an einer Befestigungseinrichtung (9) befestigt ist, die an der Einführhalterung (4) so vorgesehen ist, dass das Einführmittel (8) von der Befestigungseinrichtung (9) durch den Ringraum (48) hindurch zu der Zugvorrichtung (5) verläuft; wobei
(i) bei Aufbringen der Kraft (F⁺) auf das Einführmittel (8) durch die Zugvorrichtung (5) das Einführmittel (8) einerseits durch die Befestigungseinrichtung (9) gehaltert wird und andererseits durch die Zugvorrichtung (5) derart gezogen wird, dass es die Bewegung in der Umfangsrichtung (UR1) ausführt und sich aus dem Ringraum (48) heraus radial zu der Kanalachse (A) in den Klemmraum (310) versetzt, und
(ii) bei Aufbringen der entgegengesetzten Kraft (F⁻) auf das Einführmittel (8) durch die Zugvorrichtung (5) das Einführmittel (8) einerseits durch die Befestigungseinrichtung (9) gehaltert wird und andererseits durch die Zugvorrichtung (5) derart gedrückt wird, dass es die Bewegung in der entgegengesetzten Umfangsrichtung (UR2) ausführt und sich aus dem Klemmraum (310) heraus radial zu der Kanalachse (A) in den Ringraum (48) versetzt.

3. Anschlussvorrichtung (1) gemäß Patentanspruch 2, wobei das Einführmittel (8) ein Seil, ein elastisches Band oder eine Kette aus drehbar zueinander gelagerten, rigiden Elemente ist, das/die durch die Zugvorrichtung (5) gezogen und gedrückt wird.

4. Anschlussvorrichtung (1) gemäß Patentanspruch 3, wobei das Seil oder das elastische Band einerseits an der Befestigungseinrichtung (82) befestigt ist, den Grundkörper (2) durch den Ringraum (48) hindurch vollständig derart umläuft, dass es sich an einem Kreuzungsabschnitt (83) überkreuzt, und andererseits an der Zugvorrichtung (5) befestigt ist; wobei
(i) bei Aufbringen der Kraft (F⁺) auf das Seil oder Band durch die Zugvorrichtung (5) das Seil oder Band einerseits durch die Befestigungseinrichtung (9) gehaltert wird und andererseits durch die Zugvorrichtung (5) derart gezogen wird, dass es die Bewegung in der Umfangsrichtung (UR1) zu einem solchen Ausmaß ausführt, dass der Kreuzungsabschnitt (83) in den Klemmraum (310) versetzt wird, und
(ii) bei Aufbringen der entgegengesetzten Kraft (F⁻) auf das Seil oder Band durch die Zugvorrichtung (5) das Seil oder Band einerseits durch die Befestigungseinrichtung (9) gehaltert wird und andererseits durch die Zugvorrichtung (5) derart gedrückt wird, dass es die Bewegung in der entgegengesetzten Umfangsrichtung (UR2) zu einem solchen Ausmaß ausführt, dass der Kreuzungsabschnitt (83) wieder aus dem Klemmraum (310) heraus versetzt wird.

5. Anschlussvorrichtung (1) gemäß einem der Patentansprüche 1 bis 4, wobei
die Zugvorrichtung (5) ein linear geführtes Zugelement (51) beinhaltet, an dem der Befestigungsabschnitt (81) des Einführmittels (8) befestigt ist, und eingerichtet ist, die Kraft (F⁺) und die entgegengesetzte Kraft (F⁻) auf das Einführmittel (8) auszuüben, indem sie das Zugelement (51) linear geführt versetzt; und
die Zugvorrichtung (5) derart angeordnet ist, dass das entsprechende Zugelement (51) tangential zu der ringförmigen Einführhalterung (4) versetzbar ist.

6. Anschlussvorrichtung (1) gemäß einem der Patentansprüche 1 bis 5, weiterhin aufweisend:
eine Dichtung (47, 49), die den Grundkörper (2) umläuft und eingerichtet ist, eine neue schlauchförmige Folie abgedichtet zu befestigen, wobei die Dichtung (47, 49) derart angeordnet und ausgestaltet ist, dass die neue schlauchförmige Folie so befestigt wird, dass sie auf einen in dem Klemmraum festgeklemmten schlauchförmigen Folienrest, der von einer zuvor angeschlossenen schlauchförmigen Folie stammt, gedrückt wird und die Dichtung (47, 49) eine solche Dichtkraft auf die neue schlauchförmige Folie und den schlauchförmigen Folienrest ausübt, dass der Folienrest herausgezogen werden kann, ohne eine durch die Dichtkraft erzielte Dichtwirkung zu verlieren.

7. Anschlussvorrichtung (1) gemäß Patentanspruch 6, wobei die Einführhalterung (4) in Richtung der Kanalachse (A) durch eine Führungseinrichtung (6) verfahrbar ist und die Dichtung (47, 49) an der Einführhalterung (4) derart befestigt ist, dass sie bei Heranfahren der Einführhalterung (4) an den Grundkörper (2) die neue schlauchförmige Folie über den Folienrest streift und hierbei die Dichtkraft radial zur Kanalachse (A) auf die neue schlauchförmige Folie und den Folienrest ausübt.

## Claims

1. A connecting device (1) for connecting a tubular film to an equipment, the connecting device (1) comprising:
a base body (2) forming a passage (21), wherein the passage (21) extends along a passage axis (A) and terminates at an opening of the base body (20a) and opens to the outside;
a clamping device (3) encompassing the opening of the base body and configured to clamp the tubular film after it has been pulled over the base body (2) in a clamping space (310) so as to fasten the tubular film in a sealed manner and to enable a product, in particular in powder/granular form, to be transferred between the base body (2) and the tubular film in a contamination-free manner; and
an insertion means (8) which at least partially encompasses the base body (2) and the tubular film pulled over the base body (2) and is movable both in a circumferential direction (UR1) of the passage axis (A) and in a circumferential direction (UR2) opposite to the circumferential direction; the connecting device (1) further comprising:
an annular insertion holder (4) encompassing the clamping device (3) around the passage axis (A) and having an annular space (48) at least partially guiding the insertion means (8) during movement in the circumferential direction (UR1) and movement in the opposite circumferential direction (UR2) **characterized in that** the insertion means is movable such that
(i) when moving in the circumferential direction (UR1), it is offset radially with respect to the passage axis (A) into the clamping space (310), thereby transferring the tubular film into the clamping space (310) in a radially constricting manner, and
(ii) when moving in the opposite circumferential direction (UR2), it is offset radially with respect to the passage axis (A) out of the clamping space (310); wherein
the connecting device (1) further comprising:
a traction device (5) to which a fastening portion (81) of the insertion means (8) is fastened and which is configured to (i) apply a force (F⁺) to the insertion means (8) such that it performs the movement in the circumferential direction (UR1), and (ii) to apply a force (F⁻) opposite to the force (F⁺) to the insertion means (8) such that it performs the movement in the opposing circumferential direction (UR2); wherein
the traction device (5) is configured to apply the force (F⁺) and the opposing force (F⁻) to the insertion means (8) tangentially to the annular insertion holder (4).

2. The connecting device (1) according to patent claim 1,
wherein
another fastening portion (82) of the insertion means (8) is fastened to a fastening device (9) provided on the insertion holder (4) such that the insertion means (8) extends from the fastening device (9) through the annular space (48) to the traction device (5); wherein
(i) when the force (F⁺) is applied to the insertion means (8) by the traction device (5), the insertion means (8) is held, on the one hand, by the fastening means (9) and, on the other hand, is pulled by the traction device (5) in such a way that it performs the movement in the circumferential direction (UR1) and is offset with respect to the passage axis (A) radially out of the annular space (48) into the clamping space (310), and
(ii) when the opposing force (F⁻) is applied to the insertion means (8) by the traction device (5), the insertion means (8) is held on the one hand by the fastening means (9) and on the other hand is pushed by the traction device (5) in such a way that it performs the movement in the opposing circumferential direction (UR2) and is offset with respect to the passage axis (A) radially out of the clamping space (310) into the annular space (48).

3. The connecting device (1) according to patent claim 2,
wherein the insertion means (8) is a rope, an elastic tape or a chain of rigid elements rotatably mounted relative to each other, said insertion means being pulled and pushed by the traction device (5).

4. The connecting device (1) according to claim 3, wherein the rope or the elastic tape, on the one hand, is fixed to the fastening means (82), fully encompasses the base body (2) through the annular space (48) in such a way that it crosses over at a crossing portion (83), and on the other hand is fastened to the traction device (5); wherein
(i) when the force (F⁺) is applied to the rope or tape by the traction device (5), the rope or tape, on the one hand, is held by the fastening means (9) and, on the other hand, is pulled by the traction device (5) so as to perform the movement in the circumferential direction (UR1) to such an extent that the crossing portion (83) is offset into the clamping space (310), and
(ii) when the opposing force (F⁻) is applied to the rope or tape by the traction device (5), the rope or tape is, on the one hand, held by the fastening means (9) and, on the other hand, is pushed by the traction device (5) in such a way that it performs the movement in the opposing circumferential direction (UR2) to such an extent that the crossing portion (83) is offset again out of the clamping space (310).

5. The connecting device (1) according to any of the claims 1 to 4, wherein
the traction device (5) includes a linearly guided traction member (51) to which the fastening portion (81) of the insertion means (8) is fastened, and is configured to apply the force (F⁺) and the opposing force (F⁻) to the insertion means (8) by linearly offsetting the traction member (51); and
the traction device (5) is arranged such that the corresponding traction member (51) can be tangentially offset with respect to the annular insertion holder (4).

6. The connecting device (1) according to any of the claims 1 to 5, further comprising:
a seal (47, 49) encompassing the base body (2) and configured to sealingly fasten a new tubular film, the seal (47, 49) being arranged and configured such that the new tubular film is fastened so as to be pushed onto a remainder of tubular film clamped in the clamping space, said remainder coming from a previously connected tubular film, and said seal (47, 49) applies such a sealing force to the new tubular film and the remainder of the tubular film that the remainder of the film can be pulled out without losing a sealing effect achieved by the sealing force.

7. The connecting device (1) according to patent claim 6,
wherein
the insertion holder (4) can be moved in the direction of the passage axis (A) by a guiding device (6), and the seal (47, 49) is fastened to the insertion holder (4) in such a way that, when the insertion holder (4) is moved towards the base body (2), it sweeps the new tubular film over the remainder of the film and, in the process, applies the sealing force radially with respect to the passage axis (A) to the new tubular film and the remainder of the film.

## Revendications

1. Dispositif de raccordement (1) destiné à raccorder un film en forme de tuyau flexible à un système, dans lequel le dispositif de raccordement (1) présente :
un corps de base (2), qui réalise un canal (21), dans lequel le canal (21) s'étend le long d'un axe de canal (A) et se termine sur une ouverture du corps de base (20a) et débouche vers l'extérieur ;
un système de serrage (3), qui entoure l'ouverture du corps de base et est mis au point pour coincer dans un espace de serrage (310) le film en forme de tuyau flexible après avoir recouvert le corps de base (2) de telle manière que le film en forme de tuyau flexible est fixé de manière étanchéifiée et un produit, en particulier sous forme de poudre et/ou de granulat, peut être transféré sans contamination entre le corps de base (2) et le film en forme de tuyau flexible ; et
un moyen d'introduction (8), qui entoure au moins en partie le corps de base (2) et le film en forme de tuyau flexible tiré par-dessus le corps de base (2) et peut être déplacé à la fois dans une direction périphérique (UR1) entourant l'axe de canal (A) et dans une direction périphérique (UR2) opposée à la direction périphérique ; dans lequel
le dispositif de raccordement (1) présente par ailleurs :
une fixation d'introduction (4) annulaire, qui entoure le système de serrage (3) tout autour de l'axe de canal (A) et présente un espace annulaire (48), qui guide le moyen d'introduction (8) lors du déplacement dans la direction périphérique (UR1) et du déplacement dans la direction périphérique opposée (UR2) ; **caractérisé en ce**
**que** le moyen d'introduction peut être déplacé de telle manière
(i) **qu'**il se déplace, lors du déplacement dans la direction périphérique (UR1), radialement par rapport à l'axe de canal (A) dans l'espace de serrage (310) et transfère ce faisant le film en forme de tuyau flexible tout en se contractant radialement dans l'espace de serrage (310), et
(ii) **qu'**il se déplace, lors du déplacement dans la direction périphérique opposée (UR2), radialement vers l'axe de canal (A) hors de l'espace de serrage (310) ; dans lequel
le dispositif de raccordement (1) présente par ailleurs :
un dispositif de traction (5), sur lequel une section de fixation (81) du moyen d'introduction (8) est fixée et qui est mis au point pour (i) exercer sur le moyen d'introduction (8) une force (F⁺) de telle manière qu'il exécute le déplacement dans la direction périphérique (UR1), et (ii) pour exercer sur le moyen d'introduction (8) une force opposée (F⁻) à la force (F⁺) de telle manière qu'il exécute le déplacement dans la direction périphérique opposée (UR2) ; dans lequel
le dispositif de traction (5) est mis au point pour appliquer la force (F⁺) et la force opposée (F⁻) sur le moyen d'introduction (8) de manière tangentielle par rapport à la fixation d'introduction (4) annulaire.

2. Dispositif de raccordement (1) selon la revendication 1, dans lequel
une autre section de fixation (82) du moyen d'introduction (8) est fixée sur un système de fixation (9), qui est prévu sur la fixation d'introduction (4) de telle sorte que le moyen d'introduction (8) s'étend depuis le système de fixation (9) à travers l'espace annulaire (48) de part en part vers le dispositif de traction (5) ; dans lequel
(i) lors de l'application de la force (F⁺) sur le moyen d'introduction (8) par le dispositif de traction (5), le moyen d'introduction (8) est maintenu d'une part par le système de fixation (9) et est tiré d'autre part par le dispositif de traction (5) de telle manière qu'il exécute le déplacement dans la direction périphérique (UR1) et se déplace hors de l'espace annulaire (48) radialement par rapport à l'axe de canal (A) dans l'espace de serrage (310), et
(ii) lors de l'application de la force opposée (F⁻) sur le moyen d'introduction (8) par le dispositif de traction (5), le moyen d'introduction (8) est maintenu d'une part par le système de fixation (9) et d'autre part est poussé de telle manière par le dispositif de traction (5) qu'il exécute le déplacement dans la direction périphérique opposée (UR2) et se déplace hors de l'espace de serrage (310) de manière radiale par rapport à l'axe de canal (A) dans l'espace annulaire (48) .

3. Dispositif de raccordement (1) selon la revendication 2, dans lequel le moyen d'introduction (8) est un câble, une bande élastique ou une chaîne composée d'éléments rigides montés les uns par rapport aux autres de manière à pouvoir tourner, qui est tiré/tirée et poussé/poussée par le dispositif de traction (5).

4. Dispositif de raccordement (1) selon la revendication 3, dans lequel
le câble ou la bande élastique d'une part est fixé/fixée d'une part sur le système de fixation (82), entoure totalement le corps de base (2) tout autour de l'espace annulaire (48) de telle manière qu'il/elle se croise sur une section de croisement (83), et est fixé/fixée d'autre part sur le dispositif de traction (5) ; dans lequel
(i) lors de l'application de la force (F⁺) sur le câble ou la bande par le dispositif de traction (5), le câble ou la bande est maintenu/maintenue d'une part par le système de fixation (9) et est tiré/tirée d'autre part par le dispositif de traction (5) de telle manière qu'il exécute le déplacement dans la direction périphérique (UR1) à hauteur d'une ampleur telle que la section de croisement (83) est déplacée dans l'espace de serrage (310), et
(ii) lors de l'application de la force opposée (F⁻) sur le câble ou la bande par le dispositif de traction (5), le câble ou la bande est maintenu/maintenue d'une part par le système de fixation (9) et est poussé/poussée d'autre part par le dispositif de traction (5) de telle manière qu'il/elle exécute le déplacement dans la direction périphérique opposée (UR2) à hauteur d'une ampleur telle que la section de croisement (83) est déplacée à nouveau hors de l'espace de serrage (310).

5. Dispositif de raccordement (1) selon l'une quelconque des revendications 1 à 4, dans lequel
le dispositif de traction (5) contient un élément de traction (51) guidé de manière linéaire, sur lequel la section de fixation (81) du moyen d'introduction (8) est fixée, et est mis au point pour exercer la force (F⁺) et la force opposée (F⁻) sur le moyen d'introduction (8) en ce qu'il déplace avec un guidage linéaire l'élément de traction (51) ; et
le dispositif de traction (5) est disposé de telle manière que l'élément de traction (51) correspondant peut se déplacer de manière tangentielle par rapport à la fixation d'introduction (4) annulaire.

6. Dispositif de raccordement (1) selon l'une quelconque des revendications 1 à 5, présentant par ailleurs :
un joint d'étanchéité (47, 49), qui entoure le corps de base (2) et est mis au point pour fixer de manière étanchéifiée un nouveau film en forme de tuyau flexible, dans lequel le joint d'étanchéité (47, 49) est disposé et est configuré de telle manière que le nouveau film en forme de tuyau flexible est fixé de telle sorte qu'il est poussé sur un reste de film en forme de tuyau flexible coincé dans l'espace de serrage, qui provient d'un film en forme de tuyau flexible raccordé au préalable, et le joint d'étanchéité (47, 49) exerce une force d'étanchéité telle sur le nouveau film en forme de tuyau flexible et sur le reste de film en forme de tuyau flexible que le reste de film peut être retiré sans perdre un effet d'étanchéité obtenu par la force d'étanchéité.

7. Dispositif de raccordement (1) selon la revendication 6, dans lequel
la fixation d'introduction (4) peut être déplacée en direction de l'axe de canal (A) par un système de guidage (6) et le joint d'étanchéité (47, 49) est fixé de telle manière sur la fixation d'introduction (4) qu'il racle, lorsque la fixation d'introduction (4) passe le long du corps de base (2), le nouveau film en forme de tuyau flexible sur le reste de film et exerce ce faisant la force d'étanchéité de manière radiale par rapport à l'axe de canal (A) sur le nouveau film en forme de tuyau flexible et le reste de film.
